# EUROPEAN PATENT SPECIFICATION

(11) **EP 3 213 926 B1**
(45) Date of publication and mention of the grant of the patent: **12.02.2020**
(21) Application number: 15855249.7
(22) Date of filing: 29.10.2015
(51) Int. Cl.: B42D 25/23, B42D 25/24, B42D 25/351, B42D 25/373, B42D 25/455, B42D 25/46, B42D 25/00, B32B 27/36

(54) **MULTI-LAYER PLASTIC CARD**
MEHRSCHICHTIGE PLASTIKKARTE
CARTE EN MATIÈRE PLASTIQUE MULTICOUCHE

(30) Priority: 31.10.2014 KR 20140150407
(43) Date of publication of application: 06.09.2017
(73) Proprietor: SK Chemicals Co., Ltd., Gyeonggi-do 13494 (KR)
(72) Inventor: PYO, Ik-Jun, Cheonan-si Chungcheongnam-do 31089 (KR); YOON, Won-Jae, Seoul 06276 (KR); LEE, Kye Yune, Suwon-si Gyeonggi-do 16324 (KR); BANG, Jihwan, Seongnam-si Gyeonggi-do 13478 (KR)
(74) Representative: Modiano, Micaela Nadia
(86) International application number: PCT/KR2015/011517
(87) International publication number: WO 2016/068629

(56) References cited:
- EP-A1- 2 130 674
- EP-A2- 2 692 763
- WO-A1-2009/063058
- WO-A2-2005/062978
- JP-A- 2000 204 169
- JP-A- 2002 292 799
- KR-A- 20110 028 696
- KR-A- 20130 136 776
- KR-A- 20130 136 776
- KR-A- 20140 092 113

## Description

### TECHNICAL FIELD OF THE INVENTION

The present invention relates to a multilayer plastic card. More specifically, the present invention relates to a multilayer plastic card that has improved mechanical properties such as heat resistance, chemical resistance, and the like, has improved processability through printing compatibility, exhibits high adhesive strength to the same material and different materials, is harmless to a human body, and is environment-friendly.

### BACKGROUND OF THE INVENTION

In general, in molded products in which a sheet for a card is used, such as a credit card, a membership card, a highway high-pass card, a USIM card of communication companies, and the like, mechanical properties enabling withstanding of various environments and handling, such as heat resistance, chemical resistance, abrasion resistance, impact strength, torsion, bending stress, and the like, and secondary processing properties such as adhesive strength with the same or different materials when thermally laminating, printability, and the like are required.

For this, a conventional sheet for a card uses materials such as polyethylene terephthalate glycol, polycarbonate, polyvinylchloride, polylactide, and the like to realize the above-explained mechanical properties and secondary processing properties.

However, in the case of polyethylene terephthalate glycol, it is difficult to achieve sufficient heat resistance, and in the case of polycarbonate, although heat resistance is improved, due to an excessively high heat deflection temperature, a high temperature molding condition is required and a molding cycle is lengthened, and thus processing efficiency is degraded and chemical resistance is low.

Further, in the case of polyvinylchloride, due to lowering of flexural strength, it is particularly vulnerable to bending and torsion when handling, and in the case of polylactide, heat resistance and impact resistance are rapidly lowered after a certain time passes, adhesive strength and printability are low, and separate additional processing is required, and thus production efficiency is lowered.

Moreover, polycarbonate, polyvinylchloride, and the like are harmful to a human body, and have a problem of generating environmental hormones such as dioxins and the like when disposed of.

Therefore, there is a demand for development of a sheet material for preparation of a card that has excellent mechanical properties such as heat resistance, chemical resistance, and the like, has high processing efficiency such as printability, formability, and the like, and is harmless to a human body and is environment-friendly.

EP2130674 discloses a core sheet for card to be used together with an over-sheet provided with a structure in which at least one layer is a layer having as a main component resin an aromatic polyester series resin or a polycarbonate series resin or a mixed resin of these both for the purpose of forming a layered card, comprising one layer or two or more layers that are layered, among which at least one layer is a lactic acid series resin layer having a lactic acid series polymer as a main component resin. The lactic acid series polymer may be a co-polymer of poly(L-lactic acid), poly(D-lactic acid), poly(DL-lactic acid), or mixtures thereof and hydroxycarboxylic acid or diol/dicarboxylic acid.

WO2009-063058 discloses a security laminate comprising at least one biaxially oriented polyester lamella and an adhesion system associated therewith and on at least one side thereof, the adhesion system comprising a layer system comprising a polyester, a polyester-urethane or a copolymer of a chlorinated ethylene, the layer system being contiguous with the at least one biaxially oriented polyester lamella, wherein at least that part of the layer system contiguous with the polyester lamella was contiguous with the polyester lamella during at least part of the biaxial orientation of the at least one polyester lamella and wherein the layer system has a thickness of at least 1.0 µm;
EP2692763 discloses a polyester resin with high content of a compound derived from biomass due to copolymerization of lactic acid or a compound derived therefrom and isosorbide, and a method for preparing the same. The polyester resin has the repeated structure of diacid moiety, diol moiety and hydroxy monoacid moiety.

KR2013-0136776 discloses a polyester resin comprising a dicarboxylic acid residue containing terephthalic acid; and a diol residue containing isosorbide, cyclohexane dimethanol, and a remainder of other diol compounds, wherein the polyester resin contains a zinc-based catalyst and a phosphorous-based stabilizer, has a specific intrinsic viscosity and melting point, and has oxygen-permeability according to ASTM D 3985 below 20 cc^{∗}mm/(m2^{∗}day^{∗}atm).

### SUMMARY OF THE INVENTION

It is an object of the present invention to provide a multilayer plastic card that has improved mechanical properties such as heat resistance, chemical resistance, and the like, has improved processability through printing compatibility, exhibits high adhesive strength to the same material and different materials, and is harmless to a human body and is environment-friendly.

Provided herein is a multilayer plastic card as defined in claim 1.

### DETAILED DESCRIPTION OF THE INVENTION

Hereinafter, a multilayer plastic card according to specific embodiments will be explained in detail.

As used herein, the term "residue" means a certain part or unit that is included in the product of a chemical reaction and is derived from a specific compound, when the specific compound participates in the chemical reaction.

For example, a "residue" of a dicarboxylic acid component or a "residue" of a diol component respectively means a part derived from the dicarboxylic acid component or diol component in polyester formed by esterification or polycondensation.

According to one embodiment of the invention, a multilayer plastic card as defined in claim 1 is provided.

The inventors confirmed through experiments that if the above-explained multilayer plastic card is used, as the polyester resin included in the multilayer plastic card includes a diol component including 0.1 mol% to 85 mol% of isosorbide, a card may be provided that has improved mechanical properties such as heat resistance, chemical resistance, flexural properties, and the like, has high adhesive strength to the same material and different materials and thus may exhibit strong adhesive strength by a simple thermal lamination process without a separate adhesion treatment, has excellent printability and thus high processing efficiency, and is harmless to a human body and is environment-friendly, and completed the invention.

Particularly, in the laminate including two or more polyester resin layers that are sequentially bonded according to the invention, peel strength of the bonding between the polyester resin layers according to the ISO 10373-1 standard is 50 N/mm or more according to the invention, and preferably 55 N/mm or more, 50 N/mm to 100 N/mm, or 55 N/mm to 90 N/mm.

Specifically, the peel strength of the bonding between the polyester resin layers means peel strength in case two or more polyester resin layers are directly bonded without adhesive in the laminate.

As the peel strength in case two or more polyester resin layers are directly bonded without adhesive in the laminate satisfies the above range, a lamination process of the multilayer plastic card may be simply completed without a separate adhesion treatment and thus process efficiency may be secured, durability may be secured through strong adhesive strength, and changes in the properties and thickness of the multilayer plastic card due to the existence of a separate adhesion layer may be prevented.

Although specific examples of a method for forming the laminate including two or more polyester resin layers that are sequentially bonded are not significantly limited, for example, a method of extrusion molding each of the at least one polyester resin layer, and then joining them with a thermal laminator of 120 °C to 135 °C, a method of melting each of the at least one polyester resin layer with different extruders and joining them through a flow path positioned at the upper part of a die, and the like may be used.

The multilayer plastic card of the invention includes two or more, or three or more, or four or more polyester resin layers including a polyester resin including a residue of a diol component including 0.1 mol% to 85 mol% of isosorbide and a residue of a dicarboxylic acid component.

As used herein, the term "polyester resin layer" may refer to a single polyester resin layer. That is, the "polyester resin layer" is not a laminate of a multilayered structure but consists of a single layer.

According to the invention, the polyester resin layer includes a laminate including two or more polyester resin layers that are sequentially bonded. The laminate has a structure wherein two or more polyester resin layers are sequentially bonded and laminated.

Specifically, the multilayer plastic card may consist of only a laminate including two or more polyester resin layers that are sequentially bonded, or it may be a complex of at least one kind of a laminate including two or more polyester resin layers that are sequentially bonded and other layers described below.

The at least one kind of a laminate may refer to various kinds of laminates distinguished by the number of polyester resin layers included in the laminate. Specifically, the laminate may include a laminate including two bonded polyester resin layers, three bonded layers, four bonded layers, and the like.

According to the invention, the polyester resin included in the polyester resin layer includes a residue of a diol component including 0.1 mol% to 85 mol%, and preferably 10 mol% to 70 mol%, 30 mol% to 60 mol%, or 45 mol% to 55 mol% of isosorbide and a residue of a dicarboxylic acid component.

The polyester resin may include: residues of diol components including 0.1 mol% to 85 mol% of isosorbide, 5 mol% to 60 mol% of 1,4-cyclohexanedimethanol, and the remaining amount of other diols; and residues of an aromatic dicarboxylic acid component.

If the content of isosorbide in the diol components included in the polyester resin is less than 0.1 mol%, the glass transition temperature of the polyester resin may be lowered and heat resistance may decrease.

Further, the multilayer plastic card may be easily modified or degenerated by organic solvents or organic compounds and chemical resistance may decrease, and it may not have sufficient durability and impact resistance may also decrease.

Meanwhile, If the content of isosorbide in the diol components included in the polyester resin is greater than 85 mol%, the molecular structure of the polyester resin may not be densely formed, and mechanical properties of the multilayer plastic card, for example, impact resistance, abrasion resistance, and the like may decrease.

In addition, the diol components included in the polyester resin may further include other diol components.

The term "other diol components" means diol components except isosorbide and 1,4-cyclohexanedimethanol, and specifically, it may include C2-20 or C2-12 aliphatic diol compounds.

Although examples of the other diol compounds are not specifically limited, for example, ethylene glycol, propylene glycol, trimethylene glycol, tetramethylene glycol, hexamethylene glycol, dimethylene glycol, neopentyl glycol, C2-12 polyalkylene glycols, glycerin, pentaerythritol, trimethylolpropane, C2-12 methoxy polyalkylene glycols, or a mixture thereof may be used.

In the diol components, the ratio of the mole number of 1,4-cyclohexanedimethanol to the mole number of isosorbide may be 0.1 to 0.9, the ratio of the mole number of the other diols to the mole number of isosorbide may be 0.1 to 0.9, and the ratio of the mole number of the other diols to the mole number of 1,4-cyclohexanedimethanol may be 0.5 to 2.

Further, in the polyester resin, the ratio of the mole number of the diol components to the mole number of the dicarboxylic acid components may be 1.1 to 2, or 1.1 to 1.5.

The dicarboxylic acid component included in the polyester resin may include an aromatic dicarboxylic acid component.

The term "dicarboxylic acid component" means a compound capable of progressing an esterification reaction with a diol component, such as dicarboxylic acid, an alkyl ester of dicarboxylic acid, an acid anhydride of dicarboxylic acid, and the like.

Although examples of the aromatic dicarboxylic acid component are not specifically limited, for example, terephthalic acid may be used.

The polyester resin layer included in the multilayer plastic card may further include a polyester resin layer having unevenness with a maximum protuberance height of 0.5 µm to 20 µm on at least one side thereof.

The protuberance means a part that protrudes by unevenness, and the maximum protuberance height means a maximum value of the heights of protuberances.

As surface unevenness is formed on the polyester resin layer, a winding property, a slip property, scratch resistance, a paper feeding and travelling property, and the like of the multilayer plastic card may be improved.

Specifically, if the maximum protuberance height of the surface unevenness of the polyester resin layer is less than 0.5 µm, the degree of forming unevenness is too low, and thus the winding property, slip property, scratch resistance, paper feeding and travelling property, and the like of the multilayer plastic card may decrease, thus decreasing work efficiency.

Further, if the maximum protuberance height of the surface unevenness of the polyester resin layer is greater than 10 µm, transparency and printability of the multilayer plastic card may decrease, thus decreasing appearance quality.

Although examples of a method for forming unevenness on the surface of the polyester resin layer are not specifically limited, for example, an embossing method may be used, wherein the embossing method may include a method of processing a plate-shaped molten polymer that is discharged from a die when extrusion molding is conducted through a cast roll having an embossed surface or a specific pattern, and sheet forming, or a method of applying heat of 80 °C to 140 °C to a previously prepared sheet with equipment consisting of a hot drum and an IR heater, and then passing it through an embossing roll of a thermal laminator, and the like.

The thickness of the polyester resin layer may be 10 µm to 350 µm, 50 µm to 250 µm, or 80 µm to 200 µm.

As explained above, the thickness of the polyester resin layer means the thickness of a single polyester resin layer.

The thickness of the multilayer plastic card may be 600 µm to 1000 µm, 650 µm to 950 µm, or 700 µm to 900 µm.

The haze value of the polyester resin layer, as measured by ASTM D1003-00, may be 0.5 % to 1.0 %, or 0.6 % to 0.9 %.

Thereby, the polyester resin layer may secure optimum transparency, and thus when a multilayer plastic card including the polyester resin layer is prepared, a visual image included inside of the multilayer plastic card may be clearly recognized from the outside.

As explained above, the haze value of the polyester resin layer means the haze value of a single polyester resin layer.

If the haze value of the polyester resin layer is greater than 1.0 %, the transparency of the polyester resin layer may decrease, and thus it may be difficult to clearly realize the internal image of the multiplayer plastic card outside.

The intristic viscosity of the polyester resin may be 0.4 dl/g or more, or 0.4 dl/g to 1.2 dl/g. If the intristic viscosity of the polyester resin is less than 0.4 dl/g, the mechanical properties, particularly low-temperature impact resistance of the polyester resin layer, may decrease.

The weight average molecular weight of the polyester resin may be 5000 g/mol to 500,000 g/mol, or 10,000 g/mol to 350,000 g/mol(confirmed by GPC).

If the weight average molecular weight of the polyester resin is less than 5000 g/mol, the mechanical properties of the polyester resin layer, for example, impact resistance, abrasion resistance, and the like, may decrease.

Further, if weight average molecular weight of the polyester resin is greater than 500,000 g/mol, the melting point of the polyester resin layer may rise, and thus processability of the multilayer plastic card may decrease.

The glass transition temperature of the polyester resin may be 90 °C to 165 °C. Although examples of a method for measuring the glass transition temperature of the polyester resin are not specifically limited, for example, a method of maintaining the polyester resin at 300 °C for 5 min, gradually cooling it to room temperature, and then scanning again at a temperature-rise speed of 10 °C/min and measuring the glass transition temperature, and the like, may be used.

If the glass transition temperature of the polyester resin is less than 90 °C, the multilayer plastic card may be modified by external heat generated during the process of filling or transporting.

Further, if the glass transition temperature of the polyester resin is greater than 165 °C, the formability of the multilayer plastic card may decrease.

The polyester resin layer may further include at least one kind of heterogeneous polymer selected form the group consisting of a polycarbonate resin, a polyarylate resin, a polystyrene resin, a polyamide resin, and a polyolefin resin.

Specifically, the polyester resin sheet may further include a polycarbonate resin, a polyarylate resin, a polystyrene resin, a polyamide resin, a polyolefin resin, or a mixture thereof.

The term "heterogeneous polymer" means other polymers except the polyester resin. As the polyester resin layer further includes the heterogeneous polymer, the mechanical properties or formability of the polyester resin layer may be improved.

Specifically, in the polyester resin layer, the weight ratio of the polyester resin and the heterogeneous polymer may be 1.5:1 to 10:1.

If the weight ratio of the polyester resin and the heterogeneous polymer is less than 1.5:1, the content of the polyester resin in the polyester resin layer may excessively decrease, and thus mechanical properties such as heat resistance, chemical resistance, and the like may decrease.

The polyester resin layer may further include at least one additive selected from the group consisting of a UV absorber, an antioxidant, a stabilizer, a lubricant, an antistatic agent, an impact modifier, a wax, a coloring agent, a surfactant, and inorganic particles.

Specifically, the polyester resin layer may further include a UV absorber, an antioxidant, a stabilizer, a lubricant, an antistatic agent, an impact modifier, a wax, a coloring agent, a surfactant, inorganic particles, or a mixture thereof.

Although examples of the lubricant are not specifically limited, for example, a fatty acid ester, a fatty acid amide, and the like may be used.

Further, although examples of the surfactant are not specifically limited, for example, a cationic surfactant, an anionic surfactant, a non-ionic surfactant, and the like may be used.

Examples of the inorganic particles may include silica, alumina, aluminosilicate, talc, and the like.

The content of the additives may be 0.01 wt% to 2 wt%, based on the total weight of the polyester resin layer.

Although examples of a method for combining the above-explained additives with the polyester resin layer are not specifically limited, for example, a method of adding the additives when polymerizing a polyester resin, a method of mixing the additives with a polymerized polyester resin using blending equipment, a method of combining a high concentration of a master batch of the additives with a polyester resin through compounding extrusion, and the like may be used.

The multilayer plastic card may further include: a reinforcement layer including at least one selected from the group consisting of a thermoplastic resin, a metal, a wood, a fabric, and paper; or a printed layer including a printed material.

That is, the multilayer plastic card may include the reinforcement layer or printed layer, together with the above-explained polyester resin layer including a polyester resin including a residue of a diol component including 0.1 mol% to 85 mol% of isosorbide and a residue of a dicarboxylic acid component.

The reinforcement layer may compensate the physical properties, esthetic property, and functionality of the multilayer plastic card, and the printed layer may express information and design of the multilayer plastic card.

Specifically, at least one polyester resin layer may be bonded to at least one side of the reinforcement layer or printed layer.

The details of the at least one polyester resin layer includes those explained above.

The at least one side of the reinforcement layer or printed layer means one side or both sides of the reinforcement layer or printed layer, and through binding with the polyester resin layer, it may realize functionality while having excellent durability of the multilayer plastic card.

That is, the multilayer plastic card may include: a reinforcement layer including at least one selected from the group consisting of a thermoplastic resin, a metal, a wood, a fabric, and paper, or a printed layer including a printed material; and at least one polyester resin layer formed on at least one side of the reinforcement layer or printed layer.

The peel strength of the bonding between the reinforcement layer or printed layer and the polyester resin layer according to the ISO 10373-1 standard may be 30 N/mm to 80 N/mm, or 35 N/mm to 75 N/mm.

Specifically, the peel strength of the bonding between the reinforcement layer or printed layer and the polyester resin layer means peel strength in case the reinforcement layer or printed layer and the polyester resin layer are directly bonded without an adhesive.

As the peel strength in case the reinforcement layer or printed layer and the polyester resin layer are directly bonded without an adhesive satisfies the above range, the lamination process of the multilayer plastic card may be simply completed without a separate adhesion treatment, thus securing process efficiency, while durability may be secured through strong adhesive strength, and changes in the properties and thickness of the multilayer plastic card due to the existence of an adhesive layer may be prevented.

More specifically, in case the polyester resin layer and the reinforcement layer are bonded in the multilayer plastic card, the number of reinforcement layers, although not specifically limited, may be 1 or more, or 1 to 8.

Further, the number of polyester resin layers included in the multilayer plastic card, although not specifically limited, may be 2 to 20.

Herein, the ratio of the total thickness of the at least one polyester resin layer and the total thickness of the reinforcement layer may be 0.1:1 to 10:1, 0.3:1 to 5:1, 0.35:1 to 0.5:1, or 1.5:1 to 3:1.

The total thickness of the at least one polyester resin layer means the sum of thicknesses of the at least one polyester resin layer included in the multilayer plastic card, and the total thickness of the reinforcement layer means the sum of thicknesses of the reinforcement layers included in the multilayer plastic card.

The thermoplastic resin included in the reinforcement layer may include a polyester resin.

Although examples of the polyester resin are not specifically limited, for example, polyethylene terephthalate obtained by polycondensation of terephthalic acid and ethylene glycol, or a PET-based copolymerized polyester resin obtained by changing a part of terephthalic acid with a different dicarboxylic acid or a part of ethylene glycol with a different diol or adding the same, and the like, may be used.

Other diols used for synthesis of the polyester resin may include neopentyl glycol, 1,4-cyclohexanedimethanol, propylene glycol, tetramethylene glycol and the like.

In addition, the thermoplastic resin may further include 1 wt% to 70 wt% of a recycled resin. The recycled resin may be obtained by recycling the polyester resin layer or the multilayer plastic card.

Although examples of a method for recycling are not specifically limited, for example, a method of crushing or pulverizing the polyester resin layer or the multilayer plastic card, and drying the same, may be used.

For more specific example, a method of crushing or pulverizing the polyester resin layer or the multilayer plastic card, removing impurities while hot-air drying or dehumidification drying to 60 °C to 100 °C, and then mixing the pulverized product with other resins, melt extruding, copolymerizing, and the like, may be used.

The kind and the recycling of the other resins are not specifically limited, and a commonly used polymer resin such as a thermoplastic resin may be used.

As the thermoplastic resin further includes 1 wt% to 70 wt% of recycled resin, heat resistance of the multilayer plastic card may be improved.

Specifically, if the content of the recycled resin included in the thermoplastic resin is less than 1 wt%, the degree of improvement in heat resistance may not be particularly high.

Further, if the content of the recycled resin included in the thermoplastic resin is greater than 70 wt%, the contents of other components or impurities included in the recycled resin may increase, and thus appearance properties such as transparency or color of the multilayer plastic card may be degraded.

In addition, although examples of the metal included in the reinforcement layer are not specifically limited, for example, copper and the like may be used. The metal included in the reinforcement layer may be used to prepare an IC-CHIP, and the like.

Further, although examples of the papers included in the reinforcement layer are not specifically limited, for example, Korean paper and the like may be used.

The thickness of the reinforcement layer may be 200 µm to 300 µm. The thickness of the reinforcement layer means the thickness of a single reinforcement layer.

Examples of the printed material included in the printed layer are not specifically limited, and a printed material formed by various printing methods, for example, printed paper, a printed design, and the like may be used.

The thickness of the printed layer may be 100 µm to 200 µm. The thickness of the printed layer means the thickness of a single printed layer.

On at least one outermost side of the multilayer plastic card, a surface layer including the polyester resin layer having a thickness of 30 µm to 200 µm, 50 µm to 180 µm, or 80 µm to 160 µm may be formed. The outermost side of the multilayer plastic card means the lower side of a bottom layer and the upper side of the uppermost layer.

The surface layer may be formed, on at least one outermost side of the multilayer plastic card, and preferably, surface layers may be formed on both outermost sides of the multilayer plastic card.

As a surface layer is formed on the outermost side of the multilayer plastic card, the image included inside of the multilayer plastic card may be visually recognized outside due to transparency of the polyester resin layer, and the inside of the multilayer plastic card may be protected from the external environment due to excellent mechanical properties.

The multilayer plastic card may further include: a reinforcement layer including at least one selected from the group consisting of a thermoplastic resin, a metal, a wood, a fabric, and paper at the inside thereof; a printed layer including a printed material; or a mixture thereof.

The inside of the multilayer plastic card means remaining layers except the bottom layer and the uppermost layer, when multiple layers are laminated in a direction perpendicular to the horizontal plane.

Although examples of a method for incorporating the reinforcement layer inside of the multilayer plastic card are not specifically limited, for example, ultrasonic embedding using wood, fabric, paper, metal, or the like may be used.

Specifically, the multilayer plastic card may include: a reinforcement layer including at least one selected from the group consisting of a thermoplastic resin, a metal, a wood, a fabric, and paper; a printed layer including a printed material formed on at least one side of the reinforcement layer; and a surface layer including a polyester resin layer having a thickness of 30 µm to 200 µm, formed on one side of the printed layer so as to be opposite to the reinforcement layer.

The printed layer may be formed on at least one side of the reinforcement layer, namely, on one side or both sides of the reinforcement layer, and the surface layer may be formed on the opposite side of a side at which the printed layer contacts the reinforcement layer.

Specifically, the multilayer plastic card may include a structure wherein the printed layer is formed on one side of the reinforcement layer, and the surface layer is formed on the opposite side of the side at which the printed layer contacts the reinforcement layer.

The multilayer plastic card may include a structure wherein the printed layers are respectively formed on both sides of the reinforcement layer, and the surface layer is formed on the opposite side of the side at which the printed layer contacts the reinforcement layer.

The thickness of the reinforcement layer may be 200 µm to 300 µm, and the thickness of the reinforcement layer means the thickness of a single reinforcement layer.

The thickness of the printed layer may be 100 µm to 200 µm, and the thickness of the printed layer means the thickness of a single printed layer.

In addition, at least one polyester resin layer may be further included between the reinforcement layer and the printed layer, between the printed layer and the surface layer, or both between the reinforcement layer and the printed layer and between the printed layer and the surface layer.

The details of the at least one polyester resin layer include those explained above.

The multilayer plastic card may be used as a credit card, a membership card, a high-pass card, or a USIM card.

According to the present invention, a multilayer plastic card that has improved mechanical properties such as heat resistance, chemical resistance, and the like, has improved processability through high printing compatibility, that exhibits high adhesive strength to the same material and different materials, and is harmless to a human body and is environment-friendly, is provided.

Hereinafter, the present invention will be explained in detail with reference to the following examples. However, these examples are only to illustrate the invention, and the scope of the invention is not limited thereto.

### <Example 1: Preparation of a multilayer plastic card>

### (1) Synthesis of polyester resin

Terephthalic acid, 1,4-cyclohexanedimethanol, and ethylene glycol were put into a 7 L reactor at a mole ratio of 1:0.3:0.3, and based on the total diol, 50 mol% of isosorbide was added to progress an esterification reaction under a pressure of 0.5 kg/cm² and a temperature of 270 °C.

From the time when the esterification reaction was progressed by 60 %, 150 ppm (based on main elements) of a triethyl phosphate stabilizer was introduced; after the esterification reaction was completed, when about 80 % of a by-product of water was discharged outside of the system, based on the total weight of the reactants, 30 ppm (based on main elements) of a tin catalyst was introduced; and a polycondensation reaction was progressed under a pressure of 0.5 mmHg and a temperature of 275 °C, thus obtaining a polyester resin.

Herein, the intristic viscosity of the polyester resin was 0.62, and the glass transition temperature was 118 °C.

### (2) Preparation of a polyester resin layer

The polyester resin was put into a single-screw extruder and melted, and then a plate-shaped molten polymer discharged from a T die was emboss-processed with a cast roll having unevenness on the surface thereof, and quenched and solidified to prepare a polyester resin layer with a width of 480 mm x a length of 300 mm x a thickness of 150 µm.

Herein, a maximum protuberance height of the unevenness formed on the surface of the polyester resin layer was 8 µm.

### (3) Preparation of a multilayer plastic card

Five polyester resin layers prepared as above were laminated and adhered at a temperature of 130 °C and a pressure of 15 kg/cm² for 10 min using a thermal laminator, and then cooled at room temperature for 20 min to prepare a multilayer plastic card having a thickness of 750 µm.

### <Examples 2 to 4: Preparation of multilayer plastic card>

Two polyester resin layers prepared in Example 1 were laminated, a reinforcement layer with a width of 480 mm x a length of 300 mm x a thickness of 250 µm including the material described in the following Table 1 was laminated, and then 2 polyester resin layers prepared in Example 1 were laminated again, and they were adhered at a temperature of 130 °C and a pressure of 15 kg/cm² using a thermal laminator, and cooled at room temperature for 20 min to prepare a multilayer plastic card with a thickness of 850 µm.

**[Table 1]**

| Material of reinforcement layer | | | |
|---|---|---|---|
| | Example 2 | Example 3 | Example 4 |
| Material of reinforcement layer | Wood | Fabric | Korean paper |

### <Example 5: Preparation of a multilayer plastic card>

### (1) Preparation of a printed layer

A printing design was offset-printed in 4 colors to prepare a printed layer with a thickness of 150 µm.

### (2) Preparation of a reinforcement layer

A reinforcement layer with a thickness of 250 µm was prepared using wood, fabric, or Korean paper.

### (3) Preparation of a surface layer

A polyester resin layer with a thickness of 100 µm was prepared using the polyester resin prepared in Example 1, and at least one side of the polyester resin layer with a thickness of 100 µm was emboss-processed to prepared a surface layer.

### (4) Preparation of a multilayer plastic card

The surface layer-printed layer-reinforcement layer-printed layer-surface layer were laminated in this order, and adhered at a temperature of 130 °C and a pressure of 15 kg/cm² for 10 min using a thermal laminator, and then cooled at room temperature for 20 min to prepare a multilayer plastic card with a thickness of 750 µm.

### <Comparative Example 1: Preparation of a multilayer plastic card>

A multilayer plastic card was prepared by the same method as Example 1, except using polyvinylchloride (PVC) resin instead of the polyester resin.

### <Comparative Example 2: Preparation of a multilayer plastic card>

A multilayer plastic card was prepared by the same method as Example 1, except using acrylonitrile butadiene styrene (ABS) resin instead of the polyester resin.

### <Comparative Example 3: Preparation of a multilayer plastic card>

A multilayer plastic card was prepared by the same method as Example 1, except using polycarbonate (PC) resin instead of the polyester resin.

### <Comparative Example 4: Preparation of a multilayer plastic card>

A multilayer plastic card was prepared by the same method as Example 2, except using polyvinylchloride (PVC) resin instead of the polyester resin.

### <Comparative Example 5: Preparation of a multilayer plastic card>

A multilayer plastic card was prepared by the same method as Example 2, except using acrylonitrile butadiene styrene (ABS) resin instead of the polyester resin.

### <Comparative Example 6: Preparation of a multilayer plastic card>

A multilayer plastic card was prepared by the same method as Example 2, except using polycarbonate (PC) resin instead of the polyester resin.

### <Experimental Example: Measurement of the properties of multilayer plastic cards obtained in examples and comparative examples>

The properties of the resin layers or multilayer plastic cards obtained in examples and comparative examples were measured as follows, and the results are respectively shown.

### 1. Printing compatibility

### 1-1. Surface tension

For the resin layers obtained in Example 1 and Comparative Example 1, dyne ink pens with dyne values of the following Table 2 were applied, and after waiting for 4 s, the resin layers were observed to evaluate surface tension under the following standard, and the results are described in the following Table 2.
○: The shape of the pen ink is maintained intact
Δ: The shape of the pen ink is slightly distorted
×: The shape of the pen ink is completely distorted

**[Table 2]**

| Results of evaluating surface tension of Example 1 and Comparative Example 1 | | |
|---|---|---|
| Dyne value (mN/m) | Example 1 | Comparative Example 1 |
| 46 | × | × |
| 44 | Δ | × |
| 42 | Δ | Δ |
| 38 | ○ | ○ |
| 36 | ○ | ○ |

As shown in Table 2, it was confirmed that for the above dyne value of 38 mN/m, which is the minimum requirement for printing compatibility, the polyester resin layer of Example 1 exhibits surface tension similar to or better than the polyvinylchloride (PVC) resin layer of Comparative Example 1.

### 1-2. Ink adhesive property

The resin layers obtained in Example 1 and Comparative Example 1 were installed in an offset printer, a silk screen, and a 3D printer, and after printing, 100 scale marks were made at the interval of width and length of 1 mm on the printed ink using a cross hatch cutter (No230) knife blade (11 lines), a tape peeling test for measuring the number of detached scale marks when an adhesive tape was attached and then detached was performed, and the results are described in the following Table 3.

**[Table 3]**

| Results of evaluating ink adhesive property of Example 1 and Comparative Example 1 | | |
|---|---|---|
| | Example 1 | Comparative Example 1 |
| Offset printing | 0 | 50 |
| Silk screening | 33 | 80 |
| Digital printing | 5 | 60 |

As shown in Table 3, it is confirmed that in all modes of offset printing, silk screening, and digital printing, the number of detached scale marks in the polyester resin layer of Example 1 is remarkably smaller than in the polyvinylchloride (PVC) resin layer of Comparative Example 1.

Thus, it is confirmed that the polyester resin layer of Example 1 may have a stronger adhesive property than the polyvinylchloride (PVC) resin layer of Comparative Example 1.

### 1-3. Haze value

Using the resin layers obtained in Example 1 and Comparative Example 1, specimens were prepared according to the ASTM D1003-00 standard, haze values were measured using a haze meter, and the results are described in the following Table 4.

**[Table 4]**

| Results of evaluating haze values of Example 1 and Comparative Example 1 | | |
|---|---|---|
| | Example 1 | Comparative Example 1 |
| Haze value (%) | 0.8 | 1.2 |

As shown in Table 4, it is confirmed that, although the polyester resin layer of Example 1 exhibits a haze value of 0.8 %, and the polyvinylchloride (PVC) resin layer of Comparative Example 1 exhibits a haze value of 1.2 %, which is higher than Example 1, the polyester resin layer of Example 1 may have superior permeation resistance compared to the polyvinylchloride (PVC) resin layer of Comparative Example 1.

### 2. Heat resistance

The multilayer plastic cards obtained in Example 1 and Comparative Example 1 were punched to a size of width 85.5 mm x length 54 mm to prepare specimens, and were allowed to stand in a thermo-hygrostat having temperatures of the following Table 5 for 3 h, and then, in the multilayer plastic cards, the number of contact sides maintaining a contact state and the modified height were measured, and the results are described in the following Table 5.

**[Table 5]**

| Results of evaluating heat resistance of Example 1 and Comparative Example 1 | | |
|---|---|---|
| Temperature (°C) | Example 1 | Comparative Example 1 |
| 80 | Contact sides: 4 sides | Contact sides: 3 sides |
| | Modified height: 0 mm | Modified height: 1 mm |
| 90 | Contact sides: 4 sides | Contact sides: 2 sides |
| | Modified height: 0 mm | Modified height: 2 mm |
| 100 | Contact sides: 4 sides | Contact sides: 1 side |
| | Modified height: 0 mm | Modified height: 3 mm |
| 110 | Contact sides: 3 sides | Contact sides: 0 side |
| | Modified height: 1.5 mm | Modified height: 4 mm |

As shown in Table 5, it is confirmed that in the case of the multilayer plastic card of Example 1, even if the temperature rises from 80 °C to 100 °C, there are no changes in contact sides and modified height, while in the case of the multilayer plastic card of Comparative Example 1, as the temperature rises from 80 °C to 100 °C, the number of contact sides decreases and the modified height increases, thus generating significant modification in the appearance of the plastic card.

Thus, it is confirmed that the multilayer plastic card of Example 1 has superior heat resistance to Comparative Example 1.

### 3. Adhesive strength

### 3-1. Adhesive strength under dry condition

The multilayer plastic cards obtained in Example 1 and Comparative Example 1 were punched to a size of width 85.5 mm x length 54 mm to prepare specimens, the risen heights of the punched parts were measured, and the results are described in the following Table 6.

Further, the multilayer plastic cards obtained in Examples 2 to 4 and Comparative Examples 4 to 6 were punched to a size of width 85.5 mm x length 54 mm to prepare specimens, the risen heights of the punched parts were measured, and the results are described in the following Table 6.

**[Table 6]**

| Results of evaluating adhesive strength under dry condition of examples and comparative examples | | | | |
|---|---|---|---|---|
| | Example 1 | Example 2 | Example 3 | Example 4 |
| Risen height of punched parts (mm) | 0 | 0 | 0 | 0 |

| | Comparative Example 1 | Comparative Example 4 | Comparative Example 5 | Comparative Example 6 |
|---|---|---|---|---|
| Risen height of punched parts (mm) | 0 | 5 | 1 | 4 |

As shown in Table 6, in the multilayer plastic cards of Example 1 and Comparative Example 1 wherein the same materials are adhered, a risen height of the punched parts was not seen at all, and thus it is confirmed that adhesive strength under a dry condition is very high.

Meanwhile, with regard to adhesion between different materials, in the multilayer plastic cards of Examples 2 to 4, risen height of the punched parts was not observed like in the case of adhesion between the same materials, and thus they have excellent adhesive strength under a dry condition, while in the multilayer plastic cards of Comparative Examples 4 to 6, risen heights of the punched parts were observed, and thus adhesive strength under a dry condition relatively decreases.

Thus, it is confirmed that the multilayer plastic cards of the examples exhibit an excellent adhesive property between different materials as well as adhesive property between the same materials only with a lamination process by heat treatment, without using a separate adhesive, under a dry condition.

### 3-2. Adhesive strength under wet condition

The multilayer plastic cards obtained in Example 1 and Comparative Example 1 were punched to a size of width 85.5 mm x length 54 mm to prepare specimens, which were immersed in a 60 °C water tank for 5 min, and then the moisture absorbed height of the punched parts were measured, and the results are described in the following Table 7.

Further, the multilayer plastic cards obtained in Examples 2 to 4 and Comparative Examples 4 to 6 were punched to a size of width 85.5 mm x length 54 mm to prepare specimens, which were immersed in a 60 °C water tank for 5 min, and then the moisture absorbed height of the punched parts were measured, and the results are described in the following Table 7.

**[Table 7]**

| Results of evaluating adhesive strength under wet condition of examples and comparative examples | | | | |
|---|---|---|---|---|
| | Example 1 | Example 2 | Example 3 | Example 4 |
| Moisture absorbed height of punched parts (mm) | 0 | 0 | 0 | 0 |

| | Comparative Example 1 | Comparative Example 4 | Comparative Example 5 | Comparative Example 6 |
|---|---|---|---|---|
| Moisture absorbed height of punched parts (mm) | 0 | 4 | 4 | 3 |

As shown in Table 7, in the multilayer plastic cards of Example 1 and Comparative Example 1 wherein the same materials are adhered, the moisture absorbed height of the punched parts was not seen, and thus it is confirmed that adhesive strength under a wet condition is very high.

Meanwhile, with regard to adhesion between different materials, in the multilayer plastic cards of Examples 2 to 4, moisture absorbed height of the punched parts was not observed like in the case of adhesion between the same materials, and thus they have excellent adhesive strength under a wet condition, while in the multilayer plastic cards of Comparative Examples 4 to 6, moisture absorbed heights of the punched parts were observed, and thus adhesive strength under a wet condition relatively decreases.

Thus, it is confirmed that the multilayer plastic cards of the examples exhibit an excellent adhesive property between different materials as well as adhesive property between the same materials with only a lamination process by heat treatment, without using a separate adhesive, under a wet condition.

### 3-3. Peel strength of the bonding between polyester resin layers

According to ISO 10373-1 of the ISO/IEC 7810 standard, using the polyester resin prepared in Example 1, a polyester resin layer with a thickness of 100 µm and a polyester resin layer with a thickness of 150 µm were prepared, and they were joined by thermal lamination at a temperature of the following Table 8, and then the laminate was cut into width 10 mm x length 150 mm, peel strength was calculated through tensile strength when the polyester resin layer with a thickness of 100 µm and the polyester resin layer with a thickness of 150 µm were separated and vertically pulled, and the results are described in the following Table 8.

**[Table 8]**

| Results of evaluating peel strength of the bonding between polyester resin layers | | | | |
|---|---|---|---|---|
| Thermal lamination temperature | 120 °C | 125 °C | 130 °C | 135 °C |
| Peel strength (N/mm) | 57 | 64 | 84 | Not measurable |

As shown in Table 8, it is confirmed that a high peel strength of 57 N/mm or more is exhibited between the polyester resin layers, and as the thermal lamination temperature rises, adhesive strength between the polyester resin layers gradually increases.

### 3-4. Peel strength of bonding between a resin layer and a reinforcement layer

According to ISO 10373-1 of the ISO/IEC 7810 standard, the polyester resin prepared in Example 1 was joined with a reinforcement layer having a thickness of 250 µm including the material of the following Table 9 by thermal lamination, and then the laminate was cut into width 10 mm x length 150 mm, peel strength was calculated through tensile strength when the resin layer and the reinforcement layer were separated and vertically pulled, and the results are described in the following Table 9.

According to the ISO 10373-1 standard, the resin layers prepared in Comparative Examples 1 to 3 were respectively joined with a reinforcement layer having a thickness of 250 µm including the material of the following Table 9 by thermal lamination, and then the laminate was cut to width 10 mm x length 150 mm, peel strength was calculated through tensile strength when the resin layer and the reinforcement layer were separated and vertically pulled, and the results are described in the following Table 9.

**[Table 9]**

| Results of evaluating peel strength of the bonding between resin layer and reinforcement layer | | | | |
|---|---|---|---|---|
| | Example 1 | Comparative Example 1 | Comparative Example 2 | Comparative Example 3 |
| Wood (N/mm) | 69 | 11 | 38 | 15 |
| Fabric (N/mm) | 78 | 24 | 45 | 20 |
| Korean paper (N/mm) | 38 | 6 | 14 | 11 |

As shown in Table 9, when adhered to different kinds of materials such as wood, fabric, and Korean paper, the polyester resin layer of Example 1 exhibited higher peel strength compared to the resin layers of Comparative Examples 1 to 3.

Thus, it is confirmed that the polyester resin layer of the example may have excellent durability through strong adhesive strength to different kinds of materials used as the material of a card.

### 4. Flexural strength

### 4-1. Bending strength

Each of 10 multilayer plastic cards obtained in Examples 1 and Comparative Example 1 were punched to a size of with 85.5 mm x length 54 mm to prepare specimens, to which force was applied with the repeat numbers of the following Table 10 at a speed of 30 times/min in the width direction of 10 mm and in the length direction of 20 mm using a card flex tester according to the ISO/IEC 7816-1 standard, and then it was observed whether or not a modification (crack) was generated to evaluate bending strength under the following standard, and the results are described in the following Table 10.
○: No modification
Δ: Partially modified
×: Completely modified

**[Table 10]**

| Results of evaluating bending strength of Example 1 and Comparative Example 1 | | |
|---|---|---|
| Repeat number (times) | Example 1 | Comparative Example 1 |
| 3000 | ○ | ○ |
| 6000 | ○ | Δ |
| 9000 | ○ | × |
| 12,000 | ○ | × |

As shown in Table 10, it is confirmed that the multilayer plastic cards of Example 1 and Comparative Example 1 exhibited excellent bending strength under the condition of a repeat number of 3000 times, while under the condition of 6000 times or more, the multilayer plastic card of Example 1 was less modified and thus exhibited excellent bending strength compared to the multilayer plastic card of Comparative Example 1.

Thus, it is confirmed that the multilayer plastic card of Example 1 has superior durability to Comparative Example 1.

### 4-2. Torsional strength

Each of 5 multilayer plastic cards obtained in Example 1 and Comparative Example 1 were punched to a size of width 85.5 mm x length 54 mm to prepare specimens, to which force was applied with the repeat numbers of the following Table 11 at a speed of 30 times/min at ±15° using a card flex tester according to the ISO/IEC 7816-1 standard, and then it was observed whether or not a modification (crack) was generated to evaluate torsional strength under the following standard, and the results are described in the following Table 11.
○: No modification
Δ: Partially modified
×: Completely modified

**[Table 11]**

| Results of evaluating torsional strength of Example 1 and Comparative Example 1 | | |
|---|---|---|
| Repeat number (times) | Example 1 | Comparative Example 1 |
| 3000 | ○ | ○ |
| 6000 | ○ | Δ |
| 9000 | ○ | × |
| 12,000 | ○ | × |

As shown in Table 11, it is confirmed that the multilayer plastic cards of Example 1 and Comparative Example 1 exhibited excellent torsional strength under the condition of the repeat number of 3000 times, while under the condition of 6000 times or more, the multilayer plastic card of Example 1 was less modified and thus has excellent torsional strength, compared to the multilayer plastic card of Comparative Example 1.

Thus, it is confirmed that the multilayer plastic card of Example 1 has superior durability to Comparative Example 1.

### 5. Chemical resistance

Using the multilayer plastic cards obtained in Example 1, Comparative Example 2, and Comparative Example 3, specimens of 2 mm x 10 mm x 40 mm were prepared, they were contacted with the household goods of the following Table 12 at 60 °C for 20 h, and then the appearance was confirmed to observe whether or not modification was generated, wherein chemical resistance was evaluated under the following standard, and the results are described in the following Table 12.

Further, the specimens were contacted with the chemicals of the following Table 13 at 60 °C for 4 h, and then the appearance was confirmed to observe whether or not modification was generated, wherein chemical resistance was evaluated under the following standard, and the results are described in the following Table 13.
○: No modification
Δ: Partially modified
×: Completely modified

**[Table 12]**

| Results of evaluating chemical resistance of Example 1, Comparative Example 2, and Comparative Example 3 | | | | |
|---|---|---|---|---|
| | Evaluation level | Example 1 | Comparative Example 2 | Comparative Example 3 |
| Detergent | Hand Cleaner | ○ | × | ○ |
| | Laundry detergent | ○ | ○ | Δ |
| | Bleaching agent | ○ | Δ | × |
| | Dishwashing detergent | ○ | ○ | × |
| Cosmetics | Cleansing Oil | ○ | ○ | Δ |
| | Foundation | ○ | ○ | × |
| | Perfume | ○ | × | × |
| | UV cream | ○ | ○ | × |
| Other | Gasoline | ○ | × | × |
| | Limonene | Δ | × | × |

**[Table 13]**

| Results of evaluating chemical resistance of Example 1, Comparative Example 2, and Comparative Example 3 | | | | |
|---|---|---|---|---|
| | Evaluation level | Example 1 | Comparative Example 2 | Comparative Example 3 |
| Alcohol | Ethanol | ○ | × | ○ |
| | Methanol | ○ | × | ○ |
| | Isopropyl alcohol | ○ | × | ○ |
| Aliphatic hydrocarbon | Hexane | ○ | × | Δ |
| | Cyclohexane | ○ | × | × |
| | Heptane | ○ | × | ○ |
| Others | NaOH (10 %) | ○ | Δ | Δ |

As shown in Table 12, the multilayer plastic card of Example 1 was not modified by various household goods, and thus exhibited superior chemical resistance to the multilayer plastic cards of Comparative Examples 2 and 3.

Further, as shown in Table 13, it is confirmed that even against various chemicals, the multilayer plastic card of Example 1 exhibited chemical resistance similar to or better than the multilayer plastic cards of Comparative Examples 2 and 3.

Thus, the multilayer plastic card of the example has excellent durability against household goods and chemicals, and thus is highly applicable for real life.

## Claims

1. A multilayer plastic card comprising at least one polyester resin layer including a polyester resin which comprises a residue of a diol component comprising 0.1 mol% to 85 mol% of isosorbide and a residue of a dicarboxylic acid component,
wherein the at least one polyester resin layer includes a laminate including two or more polyester resin layers that are sequentially bonded,
wherein peel strength of the bonding between the polyester resin layers in the laminate according to the ISO 10373-1 standard is 50 N/mm or more.

2. The multilayer plastic card according to claim 1,
further comprising a reinforcement layer comprising at least one selected from the group consisting of a thermoplastic resin, a metal, a wood, a fabric, and paper; or a printed layer comprising a printed material.

3. The multilayer plastic card according to claim 2,
wherein at least one polyester resin layer is bonded to at least one side of the reinforcement layer or printed layer.

4. The multilayer plastic card according to claim 3,
wherein peel strength of the bonding between the reinforcement layer or printed layer and the polyester resin layer according to the ISO 10373-1 standard is 30 N/mm to 80 N/mm.

5. The multilayer plastic card according to claim 1,
wherein the polyester resin layer further comprises a polyester resin layer having unevenness with a maximum protuberance height of 0.5 µm to 20 µm on at least one side thereof.

6. The multilayer plastic card according to claim 1,
wherein the thickness of the multilayer plastic card is 600 µm to 1000 µm.

7. The multilayer plastic card according to claim 1,
wherein the thickness of the polyester resin layer is 10 µm to 350 µm.

8. The multilayer plastic card according to claim 1,
wherein the haze value of the polyester resin layer, as measured according to ASTM D1003-00, is 0.5 % to 1.0 %.

9. The multilayer plastic card according to claim 1,
wherein in the polyester resin, the ratio of the mole number of the diol component to the mole number of the dicarboxylic acid component is 1.1 to 2.

10. The multilayer plastic card according to claim 1,
wherein the polyester resin comprises the residues of diol components comprising 0.1 mol% to 85 mol% of isosorbide, 5 mol% to 60 mol% of 1,4-cyclohexanedimethanol, and the remaining amount of other diols; and residues of an aromatic dicarboxylic acid component.

11. The multilayer plastic card according to claim 10,
wherein in the diol components, the ratio of the mole number of the 1,4-cyclohexanedimethanol to the mole number of the isosorbide is 0.1 to 0.9.

12. The multilayer plastic card according to claim 10,
wherein in the diol components, the ratio of the mole number of the other diols to the mole number of the isosorbide is 0.1 to 0.9.

13. The multilayer plastic card according to claim 10,
wherein in the diol components, the ratio of the mole number of the other diols to the mole number of the 1,4-cyclohexanedimethanol is 0.5 to 2.

14. The multilayer plastic card according to claim 1,
wherein a surface layer comprising a polyester resin layer having a thickness of 30 µm to 200 µm is formed on at least one outermost side of the multilayer plastic card.

15. The multilayer plastic card according to claim 14,
further comprising a reinforcement layer comprising at least one selected from the group consisting of a thermoplastic resin, a metal, a wood, a fabric, and paper; a printed layer comprising a printed material; or a mixture thereof, inside of the multilayer plastic card.

16. The multilayer plastic card according to claim 15,
wherein the multilayer plastic card comprising
a reinforcement layer comprising at least one selected from the group consisting of a thermoplastic resin, a metal, a wood, a fabric, and paper;
a printed layer comprising a printed material, formed on at least one side of the reinforcement layer; and
a surface layer comprising a polyester resin layer having a thickness of 30 µm to 200 µm, formed on one side of the printed layer so as to be opposite to the reinforcement layer.

17. The multilayer plastic card according to claim 16,
further comprising at least one polyester resin layer between the reinforcement layer and the printed layer, between the printed layer and the surface layer, or both of between the reinforcement layer and the printed layer and between the printed layer and the surface layer.

## Patentansprüche

1. Eine mehrschichtige Plastikkarte, die mindestens eine Polyesterharzschicht umfasst, welche ein Polyesterharz einschließt, das einen Rest einer Diolkomponente umfasst, die 0,1 Molprozent bis 85 Molprozent Isosorbid und einen Rest einer Dicarbonsäurekomponente umfasst,
wobei die mindestens eine Polyesterharzschicht ein Laminat einschließlich zweier oder mehr Polyesterharzschichten einschließt, die sequentiell verbunden sind,
wobei die Schälfestigkeit der Verbindung zwischen den Polyesterharzschichten in dem Laminat entsprechend dem ISO 10373-1-Standard 50 N/mm oder mehr beträgt.

2. Die mehrschichtige Plastikkarte gemäß Anspruch 1,
die weiter eine Verstärkungsschicht umfasst, welche mindestens eines umfasst, das aus der Gruppe gewählt ist, die aus Folgendem besteht: einem thermoplastischen Harz, einem Metall, einem Holz, einem Gewebe und Papier; oder eine bedruckte Schicht, die ein bedrucktes Material umfasst.

3. Die mehrschichtige Plastikkarte gemäß Anspruch 2,
worin mindestens eine Polyesterharzschicht mit mindestens einer Seite der Verstärkungsschicht oder bedruckten Schicht verbunden ist.

4. Die mehrschichtige Plastikkarte gemäß Anspruch 3,
worin die Schälfestigkeit der Verbindung zwischen der Verstärkungsschicht oder bedruckten Schicht und der Polyesterharzschicht gemäß dem ISO 10373-1-Standard 30 N/mm bis 80 N/mm beträgt.

5. Die mehrschichtige Plastikkarte gemäß Anspruch 1,
worin die Polyesterharzschicht weiter eine Polyesterharzschicht mit einer Rauheit mit maximaler Ausstülpungshöhe von 0,5 µm bis 20 µm auf mindestens einer Seite derselben umfasst.

6. Die mehrschichtige Plastikkarte gemäß Anspruch 1,
worin die Dicke der mehrschichtigen Plastikkarte 600 µm bis 1000 µm beträgt.

7. Die mehrschichtige Plastikkarte gemäß Anspruch 1,
worin die Dicke der Polyesterharzschicht 10 µm bis 350 µm beträgt.

8. Die mehrschichtige Plastikkarte gemäß Anspruch 1,
worin der Trübungswert der Polyesterharzschicht, gemessen nach ASTM D1003-00, 0,5% bis 1,0% beträgt.

9. Die mehrschichtige Plastikkarte gemäß Anspruch 1,
worin das Verhältnis der Molzahl der Diolkomponente zur Molzahl der Dicarbonsäurekomponente im Polyesterharz 1,1 zu 2 beträgt.

10. Die mehrschichtige Plastikkarte gemäß Anspruch 1,
worin das Polyesterharz Folgendes umfasst: die Reste von Diolkomponenten, die 0,1 Molprozent bis 85 Molprozent Isosorbid, 5 Molprozent bis 60 Molprozent 1,4-Cyclohexandimethanol und die restliche Menge anderer Diole umfassen; und Reste einer aromatischen Dicarbonsäurekomponente.

11. Die mehrschichtige Plastikkarte gemäß Anspruch 10,
worin in den Diolkomponenten das Verhältnis der Molzahl des 1,4-Cyclohexandimethanols zur Molzahl des Isosorbids 0,1 zu 0,9 beträgt.

12. Die mehrschichtige Plastikkarte gemäß Anspruch 10,
worin in den Diolkomponenten das Verhältnis der Molzahl der anderen Diole zur Molzahl des Isosorbids 0,1 zu 0,9 beträgt.

13. Die mehrschichtige Plastikkarte gemäß Anspruch 10,
worin in den Diolkomponenten das Verhältnis der Molzahl der anderen Diole zur Molzahl des 1,4-Cyclohexandimethanols 0,5 zu 2 beträgt.

14. Die mehrschichtige Plastikkarte gemäß Anspruch 1,
worin eine Oberflächenschicht, die eine Polyesterharzschicht mit einer Dicke von 30 µm bis 200 µm umfasst, auf mindestens einer äußersten Seite der mehrschichtigen Plastikkarte geformt ist.

15. Die mehrschichtige Plastikkarte gemäß Anspruch 14,
die weiter innerhalb der mehrschichtigen Plastikkarte eine Verstärkungsschicht umfasst, welche mindestens eines umfasst, das gewählt ist aus der Gruppe, die aus Folgendem besteht: einem thermoplastischen Harz, einem Metall, einem Holz, einem Gewebe und Papier; eine bedruckte Schicht, die ein bedrucktes Material umfasst; oder eine Mischung davon.

16. Die mehrschichtige Plastikkarte gemäß Anspruch 15,
worin die mehrschichtige Plastikkarte Folgendes umfasst:
eine Verstärkungsschicht, die mindestens eines umfasst, das gewählt ist aus der Gruppe bestehend aus einem thermoplastischen Harz, einem Metall, einem Holz, einem Gewebe und Papier;
eine bedruckte Schicht, die ein bedrucktes Material umfasst, geformt auf mindestens einer Seite der Verstärkungsschicht; und
eine Oberflächenschicht, die eine Polyesterharzschicht mit einer Dicke von 30 µm bis 200 µm umfasst, geformt auf einer Seite der bedruckten Schicht, so dass sie der Verstärkungsschicht gegenüberliegt.

17. Die mehrschichtige Plastikkarte gemäß Anspruch 16,
die weiter mindestens eine Polyesterharzschicht zwischen der Verstärkungsschicht und der bedruckten Schicht, zwischen der bedruckten Schicht und der Oberflächenschicht oder sowohl zwischen der Verstärkungsschicht und der bedruckten Schicht als auch zwischen der bedruckten Schicht und der Oberflächenschicht umfasst.

## Revendications

1. Carte multicouche en plastique, comprenant au moins une couche de résine polyester qui contient une résine polyester comportant des résidus de composant diol comprenant de 0,1 à 85 % en moles d'isosorbide et des résidus de composant acide dicarboxylique,
dans laquelle la couche de résine polyester au nombre d'au moins une contient un stratifié comprenant deux couches, ou plus, de résine polyester qui sont attachées en séquence,
et dans laquelle la résistance au pelage de l'adhésion entre les couches de résine polyester au sein du stratifié, mesurée selon la norme ISO 10373-1, vaut 50 N/mm ou plus.

2. Carte multicouche en plastique, conforme à la revendication 1, qui comprend en outre une couche de renfort comprenant au moins un matériau choisi dans l'ensemble formé par une résine thermoplastique, un métal, un bois, un tissu et un papier, ou une couche imprimée comprenant un matériau imprimé.

3. Carte multicouche en plastique, conforme à la revendication 2, dans laquelle au moins une couche de résine polyester est attachée à au moins une face de la couche de renfort ou de la couche imprimée.

4. Carte multicouche en plastique, conforme à la revendication 3, dans laquelle la résistance au pelage de l'adhésion entre la couche de renfort ou la couche imprimée et la couche de résine polyester, mesurée selon la norme ISO 10373-1, vaut de 30 N/mm à 80 N/mm.

5. Carte multicouche en plastique, conforme à la revendication 1, dans laquelle la couche de résine polyester comprend en outre une couche de résine polyester qui porte, sur au moins l'une de ses faces, des irrégularités présentant une hauteur maximale de protubérance de 0,5 µm à 20 µm.

6. Carte multicouche en plastique, conforme à la revendication 1, laquelle carte multicouche en plastique présente une épaisseur valant de 600 µm à 1000 µm.

7. Carte multicouche en plastique, conforme à la revendication 1, dans laquelle l'épaisseur de la couche de résine polyester vaut de 10 µm à 350 µm.

8. Carte multicouche en plastique, conforme à la revendication 1, dans laquelle l'indice de voile de la couche de résine polyester, mesuré selon la norme ASTM D1003-00, vaut de 0,5 à 1,0 %.

9. Carte multicouche en plastique, conforme à la revendication 1, dans laquelle, dans la résine polyester, le rapport du nombre de moles du composant diol au nombre de moles du composant acide dicarboxylique vaut de 1,1 à 2.

10. Carte multicouche en plastique, conforme à la revendication 1, dans laquelle la résine polyester comporte des résidus de composants diols qui comprennent de 0,1 à 85 % en moles d'isosorbide, de 5 à 60 % en moles de cyclohexane-1,4-diméthanol, et le restant d'autres diols, et des résidus d'un composant acide dicarboxylique aromatique.

11. Carte multicouche en plastique, conforme à la revendication 10, dans laquelle, dans les composants diols, le rapport du nombre de moles de cyclohexane-1,4-diméthanol au nombre de moles d'isosorbide vaut de 0,1 à 0,9.

12. Carte multicouche en plastique, conforme à la revendication 10, dans laquelle, dans les composants diols, le rapport du nombre de moles d'autres diols au nombre de moles d'isosorbide vaut de 0,1 à 0,9.

13. Carte multicouche en plastique, conforme à la revendication 10, dans laquelle, dans les composants diols, le rapport du nombre de moles d'autres diols au nombre de moles de cyclohexane-1,4-diméthanol vaut de 0,5 à 2.

14. Carte multicouche en plastique, conforme à la revendication 1, dans laquelle une couche de surface comprenant une couche de résine polyester épaisse de 30 µm à 200 µm est formée sur au moins une face externe de la carte multicouche en plastique.

15. Carte multicouche en plastique, conforme à la revendication 14, qui comprend en outre, au sein de la carte multicouche en plastique, une couche de renfort comprenant au moins un matériau choisi dans l'ensemble formé par une résine thermoplastique, un métal, un bois, un tissu et un papier, une couche imprimée comprenant un matériau imprimé, ou une combinaison de telles couches.

16. Carte multicouche en plastique, conforme à la revendication 15, laquelle carte multicouche en plastique comprend :
- une couche de renfort comprenant au moins un matériau choisi dans l'ensemble formé par une résine thermoplastique, un métal, un bois, un tissu et un papier,
- une couche imprimée comprenant un matériau imprimé, formée sur au moins une face de la couche de renfort,
- et une couche de surface comprenant une couche de résine polyester épaisse de 30 µm à 200 µm, formée sur la face de la couche imprimée opposée à celle où se trouve la couche de renfort.

17. Carte multicouche en plastique, conforme à la revendication 16, qui comprend en outre au moins une couche de résine polyester, entre la couche de renfort et la couche imprimée, entre la couche imprimée et la couche de surface, ou à la fois entre la couche de renfort et la couche imprimée et entre la couche imprimée et la couche de surface.
